# EUROPEAN PATENT APPLICATION

(11) **EP 0 607 104 A1**
(43) Date of publication of application: **20.07.1994**
(21) Application number: 94830002.5
(22) Date of filing: 11.01.1994
(51) Int. Cl.: B01D 5/00

(54) **System for recovering solvents or solvent mixtures dissolved in air or in an inert gas**

(30) Priority: 15.01.1993 IT MI930053
(71) Applicant: SAPIO PRODUZIONE IDROGENO OSSIGENO S.r.L., I-20052 Monza, Milano (IT)
(72) Inventor: Cantu, Giovanni, Sapio Prod. Idrogeno Ossigeno, I-20052 Monza (Milano) (IT)
(74) Representative: Cicogna, Franco

(57) **Abstract**

A system for recovering solvents or solvent mixtures dissolved in air or in an inert gas, characterized in that the system comprises at least a drier-exchanger (6,7) into which there is produced a gas flow containing the solvents to be recovered.

The drier-exchanger (6,7) performs a first cooling operation (8,8') on the gas flow, to a temperature included between -10°C and -30°C.

The gas flow (14), at the output of the drier-exchanger (6,7), is introduced into a separating condenser (20), cooled by a liquid nitrogen evaporator (21).

The gas flow (23), which has been cooled to a temperature from -80°C to -150°C, is subjected to the condensing of the solvent, which is conveyed to the outside and recovered, whereas the gas fluid, upon depuration, is again introduced into the dier-exchanger, for cooling (28,28') the latter.

## Description

### BACKGEROUND OF THE INVENTION

The present invention relates to a system for recovering solvents or solving mixtures dissolved in air or in an inert gas.

As is known, in a lot of industrial fields, such as in the chemical industry, pharmaceutic industry and article of manufature industry in general, it is necessary to discharge a lot of gaseous fluids containing solvents.

At present this operation involves great problems due to an environmental polluting possibility, thereby the removal of solvent containing gaseous fluids is related to very high operation costs.

### SUMMARY OF THE INVENTION

Accordingly, the aim of the present invention is to overcome the above mentioned problem, by providing a system for recovering solvents or solvent mixtures which allow to recover the solvents with a positive economic balance, thereby solving the problem of the dispersion of these solvents into the environment, and allowing to recover value solvents the value of which is greater than the system operating cost.

Within the scope of the above mentioned aim, a main object of the present invention is to provide such a solvent recovery system allowing to separate a desired solvent from a mixture of air or of an inert gas in which the solvent is dissolved, so as to provide a high purity recovered solvent.

Another object of the present invention is to provide such a solvent recovery system which is very reliable and safe in operation, can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a system for recovering solvents or solvent mixtures dissolved in air or in an inert gas, characterized in that said system comprises at least a drier-exchanger into which there is introduced a gaseous flow containing solvents to be recovered; the drier-exchanger performing a first cooling operation of the gaseous flow to a temperature from -10°C to -30°C; at the output of the drier-exchanger the gasous flow being itroduced into a separating condenser, cooled by a liquid nitrogen evaporator to a temperature from -80°C to -150°C and being subjected to a condensng of the solvent held therein, said solvent being conveyed to the outside and recovered whereas the gaseous fluid, as depurated, is again introduced into the drier-exchanger for cooling the latter.

### BRIEF DESCRIPTION OF THE DRAWING

Further characteristics and advantages of the invention will become more apparent hereinafter from the following detailed description of a preferred, though not exclusive, embodiment of a system for recovering solvents or solvent mixtures dissolved in air or in an inert gas, which is illustrated, by way of an indicative, but not limitative example, in the figure of the accompanying drawing, where:

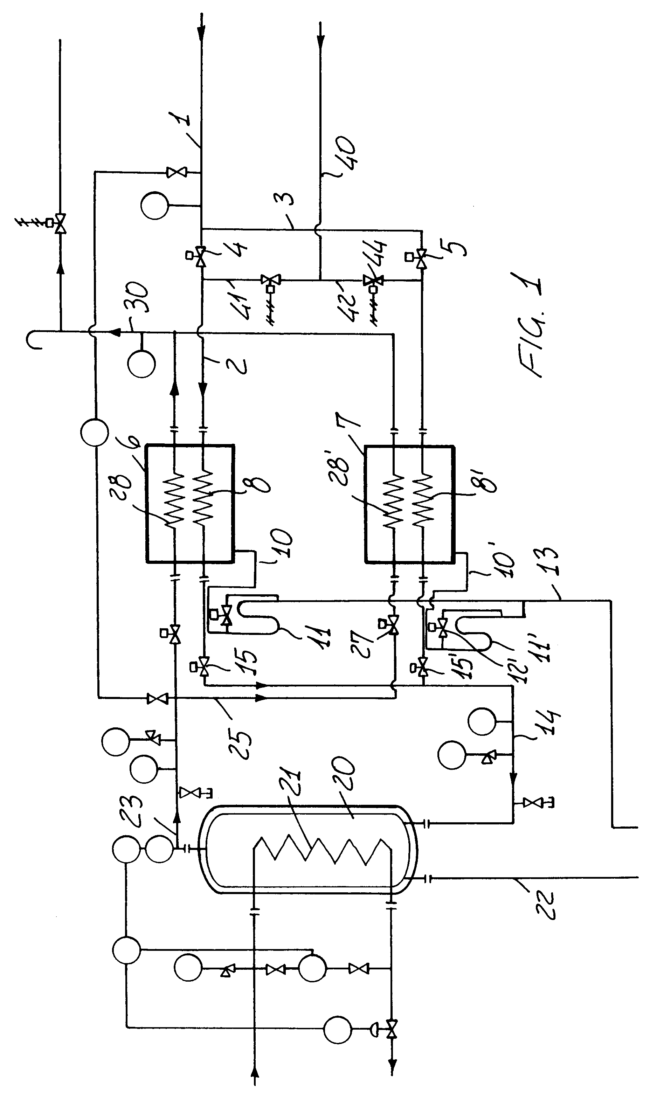

Figure 1 illustrates a schematic diagram of the solvent recovery system according to the present invention.

### DESCRIPTION OF THE PREFERRED EMBODIMENT

With reference to the number references of the above mentioned figure, the system for recovering solvents or solvent mixtures, dissolved in air or in an inert gas, according to the present invention comprises two main operating assemblies and, more specifically, one or more drier-exchangers, for performing a pre-cooling of the gaseous flow or stream, and a separating condenser, where the gaseous fluid is subjected to a very low temperature, thereby causing the solvent to be condensed and the gaseous fluid to be separated.

As shown, the subject system comprises a duct 1 for introducing a gaseous flow or stream, comprising a given amount of volatile solvents,which duct is branched into a first branching duct 2 and a second branching duct 3 which are connected, respectively through the interposition of a first switching valve 4 and a second switching valve 5, with a drier-exchanger, indicated at the reference number 6, for the first drier-exchager and at the reference number 7, for the second drier-exchanger.

The gaseous flow or stream is alternately and selectively introduced into either one or the other heat-exchanger.

Inside the heat exchangers there is provided a flow conveying coil, respectively indicated at the reference numbers 8 and 8', where the gaseous stream is subjected to a temperature decrease in order to bring it to a temperature from -10°C to -30°C.

At the drier-exchangers 6 and 7 there is provided a condensate discharging duct, indicated at the reference numbers 10 and 10', which communicates with a siphon 11 and 11', in turn connected with valves 12 and 12', and communicating with a water evacuating duct, indicated at the reference number 13.

Downstream of the driers-exchangers 6 and 7, the cooled gaseous flow is introduced into a conveying duct 14, the communication therebetween being controlled by controlling valves 15 and 15'.

The conveying duct 14 leads to the inside of a separating condenser, indicated at 20, in which there is provided an evaporator 21 which is supplied with liquid nitrogen in order to lower the temperature of the gaseous flow or stream to -80°C/+150°C, thereby the solvent is caused to condense and is ejected to the outside, through a discharging or outlet duct 22 for the solvent, thereby providing a very high purity solvent which can be accordingly easily recovered.

From the separating condenser, at the top portion thereof, there extends a depurated gaseous fluid separating duct 23, which is held at a low temperature and is used for cooling down the driers-exchangers 6 and 7, by means of branching ducts 24 and 25, which are controlled by the valves 26 and 27 allowing to alternately introduce the gaseous fluid, operating as a cooling element, into the drier-exchanger affected by the passage of the gaseous flow or stream to be cooled.

At the outlet of the cooling coils, indicated at the reference numbers 28 and 28' and respectively interposed on the ducts 24 and 25 for conveying the gaseous fluid, there is provided an air discharging or outlet duct, indicated at 30, which can freely communicate with the atmosphere since the ejected gasous fluid is actually fully free of solvents and the like materials.

Due to the very low temperature used during the cooling step, in the drier-exchanger there are formed ice scales on the outer surface of the coils 8 and 8', which can remarkably reduce the thermal transmission coefficient.

In order to solve this problem, the system is designed with two driers-exchangers, which operate alternately, thereby, as in an exchanger there are formed ice scales, and more specifically on the coil thereof, the fluid passage is shut off and there is actuated the other exchanger.

Moreover, inside the coils 8 and 8' a hot fluid is caused to circulate, through an inlet duct 40, which is split into two portions 41 and 42, respectively controlled by controlling valves 43 and 44 which operate to switch the passing hot fluid from a portion or from the other, depending on the contingent requirements.

The hot fluid is then discharged through the water evacuating duct, to the outside.

In the practical operation, the gas and solvent stream or flow is conveyed, at the start, to a drier exchanger, where it is subjected to a first cooling.

During this step, the water steam and moisture which are present in the air precipitate on the bottom of the driers-exchangers 6 and 7 in water form, which is evacuated through the ducts 10 and 10', communicating with the siphons 11 and 11' in turn connected to two valves 12 and 12', one of which is open, whereas the other is closed and vice-versa.

The collected water flow, by gravity into the evacuating duct and is discharged to the outside environment.

The gaseous mixture, which has been stripped from moisture, is conveyed to the separating condenser 20, where it is sharply cooled, to a temperature from -80°C to -150°C.

The air and and solvent stream, in said separating condenser, is subjected to a solvent condensing step, said solvent being discharged to the outside and recovered.

The air or inert gas stripped from the solvent and having a very low temperature, is conveyed to the driers-exchangers, and operates as a cooling element for said driers-exchangers.

Thus, cooling power is recovered from the gaseous stream, which is practically used for cooling the gaseous flow of the air or inert gas and solvent mixture.

As above mentioned, the driers-exchangers 6 and 7 are operated alternately, in order to allow, during the non operation step, to easily remove ice formed on the coils of said exchangers.

This recovery or regeneration of the driers-exchangers is advantageously accelerated by conveying, into the bodies of said driers-exchangers, hot fluids conveyed through the duct 40 which is split into the ducts 41 and 42 controlled by the controlling valves 43 and 44 so as to cause the ice to be quickly dissolved thereby recovering the starting operating conditions.

From the above disclosure it should be apparent that the invention fully achieves the intended aim and objects.

In particular, the fact is to be pointed out that a system has been provided which allows to recover great amounts of solvents, thereby the system is very advantageous since the value of the recovered solvents is greater than the cost of the liquid nitrogen used for the operation of the system: accordingly, the economic balance of the system is very positive.

The invention as disclosed is susceptible to several variations and modifications all of which will come within the inventive idea.

Moreover, all of the details can be replaced by other technically equivalent elements.

In practicing the invention, the used materials, as well as the contingent size and shapes can be any depending on the requirements.

## Claims

1. A system for recovering solvents or solvent mixtures dissolved in air or in an inert gas, characterized in that said system comprises at least a drier-exchanger into which there is introduced a gaseous flow containing solvents to be recovered; the drier-exchanger performing a first cooling operation of the gaseous flow to a temperature from -10°C to -30°C; at the output of the drier-eschanger the gaseous flow being introduced into a separating condenser, cooled by a liquid n nitrogen evaporator to a temperature from -80°C to 150°C and being subjected to a condensing of the solvent held therein, said solvent being conveyed to the outside and recovered whereas the gaseous fluid, as depurated, is again introduced into the drier-exchanger for cooling the latter.

2. A system according to Claim 1, characterized in that said system comprises a first and second driers-exchangers which are alternately and selectively affected by the passing gaseous flow.

3. system according to Claims 1 and 2, characterized in that said system further comprises a branched duct which is split from the gaseous flow inlet duct, and being controlled by switching valve means.

4. A system according to one or more of the preceding claims, characterized in that said system further comprises, downstream of each said drier-exchanger a condensate recovery assembly, for recovering the condensate being discharged to the outside, and including siphon and control valve means which can be alternately used.

5. A system according to one or more of the preceding claims, characterized in that said system further comprises, on the gaseous fluid conveying duct, a plurality of switching valves, for selectively introducing said gaseous fluid or flow either into one or into the other drier-exchanger.

6. A system according to one or more of the preceding claims, characterized in that said system further comprises a duct for introducing a hot fluid into the coils of the drier-exchanger in order to remove condensate materials.

7. A system according to one or more of the preceding claims, characterized in that said system further comprises, on said hot fluid inlet duct, a plurality of switching valves adapted to selectively and alternately supply either one or the other of said drier-exchangers.
